# EUROPEAN PATENT APPLICATION

(11) **EP 1 439 455 A1**
(43) Date of publication of application: **21.07.2004**
(21) Application number: 03010399.8
(22) Date of filing: 08.05.2003
(51) Int. Cl.: G06F 3/14

(54) **Image display system for displaying different images on separate display devices**

(30) Priority: 17.01.2003 DE 10301865
(71) Applicant: Harman/Becker Automotive Systems GmbH, 76307 Karlsbad (DE)
(72) Inventor: Maier, Michael, 78054 VS-Schwenningen (DE); Sagcob, Thomas, 78166 Donaueschingen (DE); Broghammer, Bernhard, 78144 Tennenbronn (DE)
(74) Representative: Grünecker, Kinkeldey, Stockmair & Schwanhäusser Anwaltssozietät

(57) **Abstract**

The present invention relates to an image display input system, in particular for use in a vehicle information and entertainment system, for displaying at least two different images on separate display devices. A single image display input signal contains a sequence of images wherein an image display signal generator splits the single image display input signal into at least two image display signals in temporal or spatial respect. The use of a single image display input signal enables a reduction of the required hardware effort for generating more than one image display signal.

## Description

The invention relates to an image display system and a method for displaying at least two images on separate display devices. In particular, the present invention relates to a vehicle information and entertainment system displaying images on separate display devices within a vehicle.

Nowadays, vehicles have a plurality of information and entertainment devices on board for distributing various image display signals to the driver and, in addition, to the other passengers. This is accomplished by separate displays each displaying a different image signal. For instance, a first display device may be provided for the driver and a second or additional device may be provided for the other passengers. As the driver needs to concentrate on the surrounding traffic flow, the driver's display should only provide essential information whereas the passengers' displays may also reproduce image details. A corresponding car navigation system would consequently only provide direction information on a driver's display, whereas the details of the surrounding environment are provided to the other passengers. Such displays may also be used for the display of video images or other control information of any vehicle information and entertainment device, such like a television or radio receiver, a DVD player, a cell phone, an Internet access device, vehicle control devices, a vehicle rearview device etc.

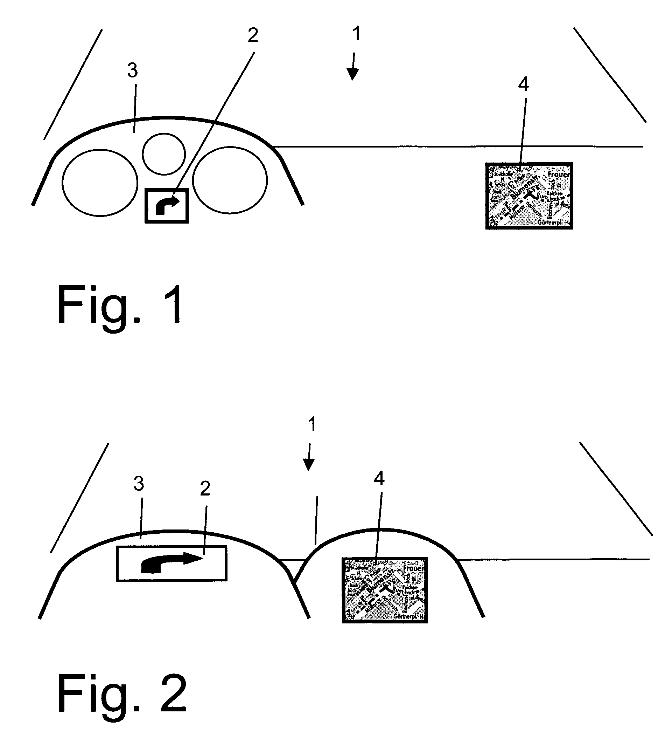

A first example of a configuration of such displays on a vehicle dashboard 1 is illustrated in Fig. 1. A first display 2 is arranged in the driver's field of view, preferably on the instrument panel 3. A second display 4 is provided in the front-seat passenger's field of view. As shown in Fig. 1, displays 2 and 4 may differ in size and displayed information quantity.

Another example configuration of two displays in the driver's field of view is illustrated in Fig. 2. It is the particular aspect of this configuration to provide information on two separate displays 2, 4 to the driver, each of which providing a different amount of information. Display 2 is arranged on the instrument panel 3 and displays an image signal from one of the vehicle information and entertainment devices. In addition, more detailed or different information is provided to the driver by a second display 4 arranged at a more peripheral position within the driver's field of view.

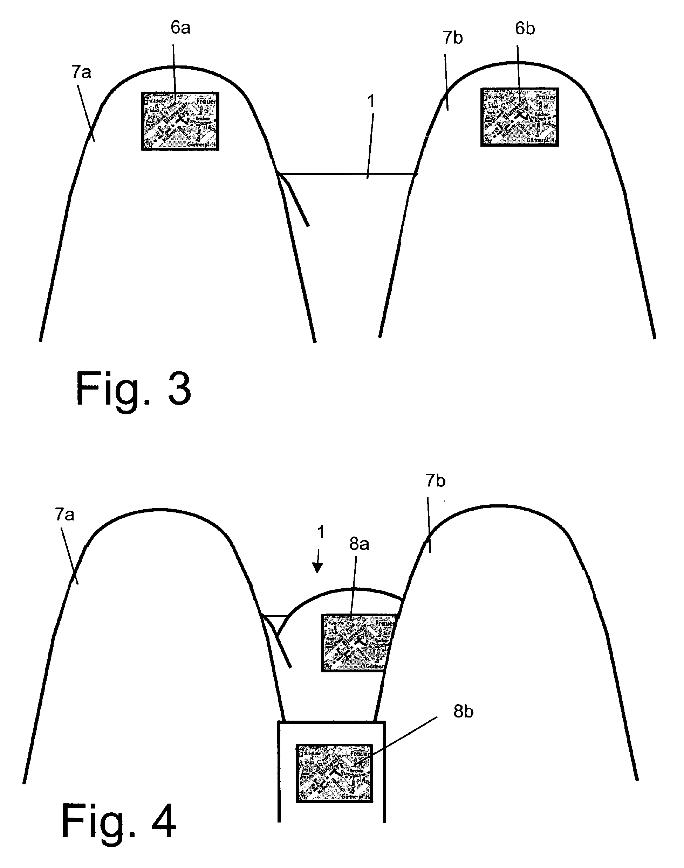

Other possible configurations of separate display devices within a vehicle are illustrated in Fig. 3 and Fig. 4. These configuration also take the rear-seat passengers into account. As shown in Fig. 3, the individual display devices 6a, 6b are mounted on the back side of the front-seats, preferably both display devices 6a, 6b display individual image signals, for instance different video entertainment signals supplied by a DVD player or a vehicle TV receiver, vehicle information signals provided by the car navigation system or any combination thereof.

The display configuration of Fig. 4 differs from the arrangement shown in Fig. 3 in that the rear-seat passengers have a single display device 8b whereas at least one other display device 8a is mounted on the vehicle dashboard 1.

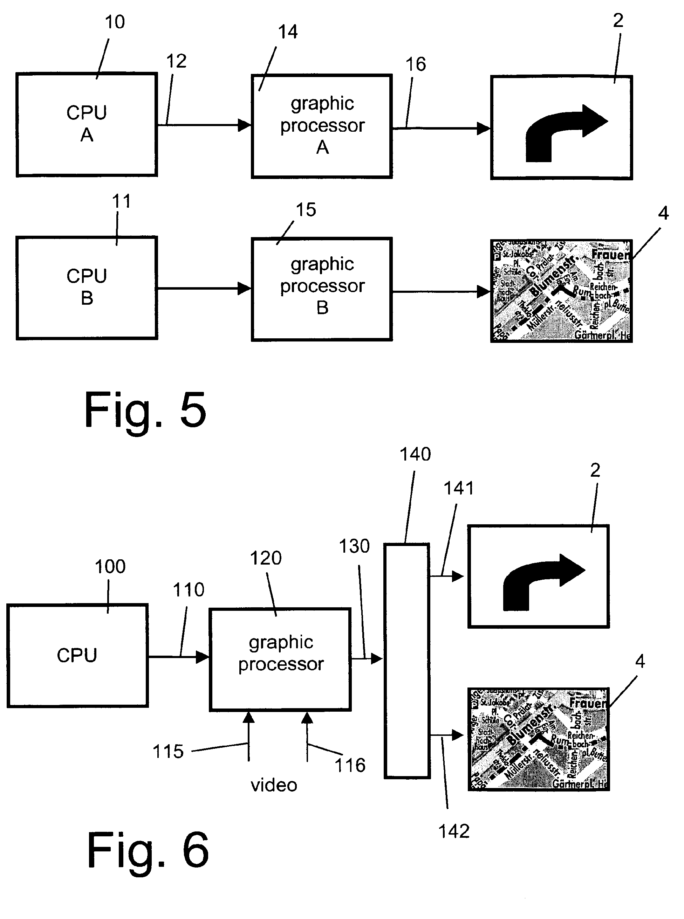

Conventionally, such different display images for separate display devices are generated separately. For this purpose, individual image processing hardware generates the image signals for the first display and additional hardware for the second display. Such a hardware configuration is illustrated in Fig. 5. A graphic processor 14 generates the images display signal 16 for display on a first display device 2. The operation of graphic processor 14 is controlled by image generation commands 12 supplied by CPU 10. CPU 10 performs a preprocessing of the image data to be displayed and provides the image content together with control information to the graphic processor 14.

Graphic processor 14 generates the image display signal 16 based on the information 12 received from CPU 10 and, in addition, the particular properties of the display device 2. Specifically, the image display signal 16 is generated by taking the image content and control information from the CPU, the display resolution, the frame rate etc. into account. For this purpose the graphic processor performs drawing operations like rotating, zooming, vector operations etc.

As for each of the display devices 2, 4 corresponding hardware is required, the image data for the second display device 4 are generated by CPU 11 and graphic processor 15 in a corresponding manner.

One problem of such prior art configurations is that each display requires separate image processing hardware, in particular a separate CPU for providing a display content and a separate graphic processor for generating a display image signal. Such additional hardware causes higher costs, a larger amount of heat to be dissipated, extra space on the circuit board and for the housing and costly extra EMC counter measures.

In view of this prior art it is the object of the present invention to provide an image display system, a vehicle information and entertainment system, an image display signal generator, a graphic processor, and a method for generating at least two display image signals by employing a less complex hardware configuration.

This is achieved by an image display system as set forth in claim 1, by an vehicle information and entertainment system as set forth in claim 9, by an image display signal generator as set forth in claim 18, by a graphic processor as set forth in claim 26 and by a method for generating at least two image display signals as set forth in claim 31.

According to a first aspect of the present invention, an image display system is provided for displaying different images on separate display devices wherein the different images result from a single image display input signal. The single image display input signal contains a sequence of images, and the image display system comprises an image display signal generator for generating an individual display image signal for each of the display devices by dividing the single image display input signal in temporal or spatial respect.

It is the particular advantage of the present invention that only conventional hardware is needed for providing at least two separate image display signals. The single graphic processor receives information for generating an image display signal consisting of image data of two individual images forming the single image display input signal. The single image display input signal is split into separate image display signals by dividing the single image signal received from the graphic processor in temporal or spatial respect. The obtained separate image display signals are then supplied to and displayed by the separate display devices.

This approach avoids the need of individual processing hardware for each image display signal to be generated by simply employing spare processing capacity of a graphic processor for incorporating an additional image display signal into the generated image signal. Consequently, the present invention achieves a display of at least two individual image display signals with lower costs, less heat to be dissipated, less space on the circuit board and for the housing and less effort for EMC counter measures.

Further, the present invention abolishes the current requirement to prepare a vehicle for possible later installation of additional hardware for additional display devices. Such a preparation is particularly costly as only a rather small proportion of vehicles will be equipped with additional hardware at a later stage. In contrast, the splitting of a single image display input signal according to the present invention into at least two separate image display signals for separate display devices is accomplished by hardware currently employed for each individual display device. Thus, no extra space on a circuit board and for a the housing has to be provided and the vehicle does not need to be prepared for dissipating additional heat.

According to a preferred embodiment, the image display system divides the image sequence of the single image display input signal in individual images for generating each of the separate image display signals. Thus, each of the images of the image sequence only contains data of one of the display image signals, namely for one of the display devices.

Preferably, the images are separated from the sequence in accordance with a predefined interval of images. The image information for each of the displays can thus be distributed on the images of the image sequence in proportion to the amount of image data to be transmitted to each of the displays.

According to a preferred embodiment, the generator of the image display system divides each image of the image sequence into portions for generating each of the image display signals. Thus, the different information is distributed in spatial respect within each individual image of the image sequence of the single image display input signal.

Preferably, the image portions in the single display image input signal are defined by dividing the image in horizontal respect enabling less complex hardware for splitting the single image display input signal into separate signals.

According to another preferred embodiment, the image data of an individual display image signal are spread over predefined lines of each of the images of the image sequence. Thus, the image information for one of the display devices can be retrieved by evaluating the information stored on the respective, predefined lines. Each of the lines only represent a small amount of data, each image portion can thus be accurately adjusted to the amount of data to be transmitted in a simple manner.

Preferably, the image display system of the present invention is employed in a vehicle information and entertainment system. Image signals of different image sources can be generated in a combined manner on a single hardware in the vehicle for display on a plurality of image display devices.

According to a preferred embodiment, the vehicle information and entertainment system comprises a car navigation system and one of the display image signals contains map data from the car navigation system intended for display on a first image display device.

Preferably, another one of the display image signals contains second map data different from the first map data. Such an approach enables to separately transmit individual information to the driver and to the other passengers of the vehicle wherein the driver only receives directional information or map data of the vicinity of the current vehicle position. The other passengers may however receive map data displaying detailed information of the surrounding environment (or, alternatively, video data not related to car navigation).

According to another preferred embodiment, the first map data only contains directional commands generated by the car navigation system. Thus, the amount of information to be transmitted and provided to the driver differs significantly from the information provided to the other passengers.

According to a preferred embodiment, the vehicle information and entertainment system transmits display image signals from a plurality of data sources such as a car navigation system, a television receiver, a DVD player, a cell phone, a cordless phone, an Internet access device, a vehicle control device, a rearview device etc. Consequently, the image display system of the present invention can be used for all devices within a vehicle requiring a display of two dimensional data. The hardware for generating image display signals may be jointly used by different devices providing image information for display on separate display devices.

Preferably, one of the plurality of display devices is mounted in the driver's field of view. Other display devices are mounted in the field of view of other vehicle front-seat or rear-seat passengers.

According to another embodiment, an image display signal generator is provided for generating at least two image display signals from a single image display input signal. The image display signals generated by the image display signal generator are intended for display on separate display devices. The received single image display input signal contains a sequence of images and the image display generator divides the display image input signal in temporal or spatial respect to provide each of the image display signals.

According to still another embodiment of the present invention, a method for generating at least two image display signals for display on separate display devices is provided. The separate image display signals are generated from a single image display signal which contains a sequence of images. The images of the sequence of images of the single image display signal are divided in temporal or spatial respect to generate each of the separate image display signals for the separate devices.

Further preferred embodiments of the present invention are the subject-matter of dependent claims.

Additional features and advantages of the present invention will become apparent from the following description of the invention as illustrated in the drawings, wherein:
- Fig. 1: schematically illustrates a display configuration of two display devices for the front-seat passengers of a vehicle;
- Fig. 2: schematically illustrates a display configuration of two display devices arranged in the driver's field of view;
- Fig. 3: schematically illustrates a display configuration of two display devices for the rear-seat passengers of a vehicle;
- Fig. 4: schematically illustrates a display configuration of two display devices including one display device for the front-seat passengers of a vehicle and another display device for the rear-seat passengers;
- Fig. 5: schematically illustrates a block diagram of the hardware required for providing image display signals for two display devices in a conventional manner;
- Fig. 6: schematically illustrates a block diagram of the hardware for an image display system according to the present invention;
- Fig. 7: schematically illustrates a block diagram of an alternative hardware configuration for an image display system according to the present invention;
- Fig. 8: schematically illustrates a block diagram of a further alternative hardware configuration for an image display system according to the present invention including a man-machine-interface;
- Fig. 9: illustrates a first concept of a single image display input signal containing image information from two different image display signal sources;
- Fig. 10: illustrates a first concept of generating two image display signals from the single image display input signal containing image information from two different image display signal sources;
- Fig. 11: illustrates a second concept of a single image display input signal containing image information from two different image display signal sources;
- Fig. 12: illustrates a second concept of generating two image display signals from the single image display input signal containing image information from two different image display signal sources;

- Fig. 13A -Fig. 13F: illustrate exemplary embodiments for incorporating several image display signals by dividing the images of a single image display input signal in spatial respect;
- Fig. 14A: schematically illustrates a block diagram of a first memory configuration of the image display signal generator according to the present invention;
- Fig. 14B: schematically illustrates a block diagram of a second memory configuration of the image display signal generator according to the present invention; and
- Fig. 15: schematically illustrates the concept of Fig. 11 and Fig. 12 for generating two image display signals from a single image display input signal in more detail.

The illustrative embodiments of the present invention will now be described with reference to the drawings.

The basic concept of the present invention is illustrated in Fig. 6. A CPU 100 generates image content and control information 110 for two individual image signals. The image content and control information 110 is transmitted to a graphic processor 120 for generating an image display signal 130 based on the received information 110.

The image content and control information 110 may comprise information for two separate images included within one image signal. Correspondingly, processor 120 generates an image display input signal 130 comprising image display information relating to two separate devices.

Alternatively, graphic processor 120 may receive additional image information 115, 116 from external sources. The single image display output signal 130 may thus comprise a combination of any of the received image content informations 110, 115, 116. Preferably, the single image display input signal 130 is made up of image information for two separate displays.

Display devices 2,4 used in vehicles generally have image resolutions of in the range 480 x 200 pixels or of 800 x 480 pixels. Such image sizes do not require the processing capacity provided by conventional graphic processors. The spare processing power may easily be employed for the generation of a combined single image display input signal 130.

Preferably, both displays 2,4 are of equal size. The image generation by graphic processor 120 may thus be accomplished in a simple manner.

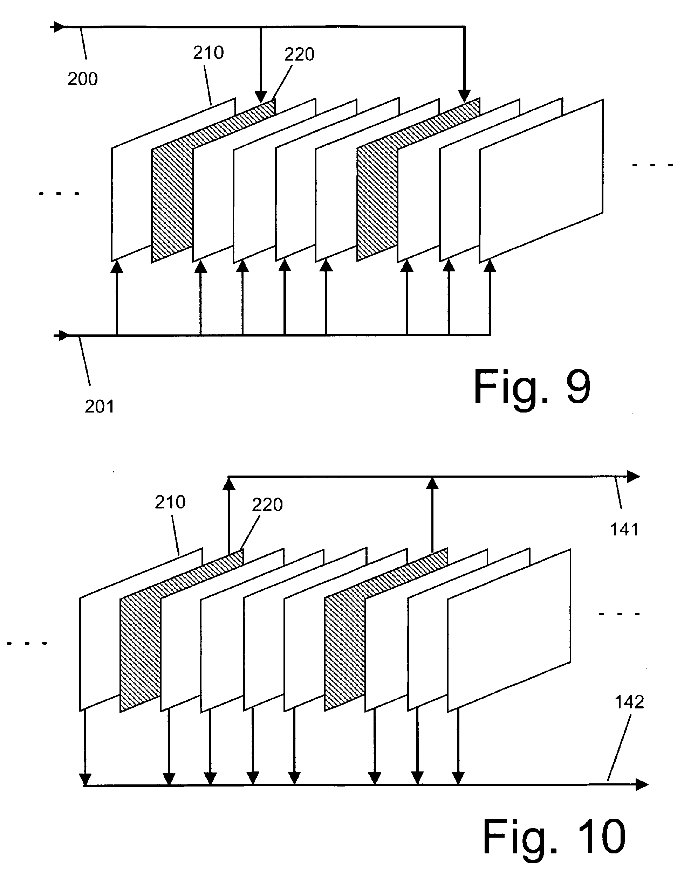

The single image display input signal 130 is supplied to an image display generator 140 generating two image display signals 141, 142 for the separate display devices 2,4. Image display generator 140 splits the received single image display input signal 130 into the separate image display signals 141, 142. The operation performed by image display generator 140 will be described in more detail with reference to Figures 9 to 15.

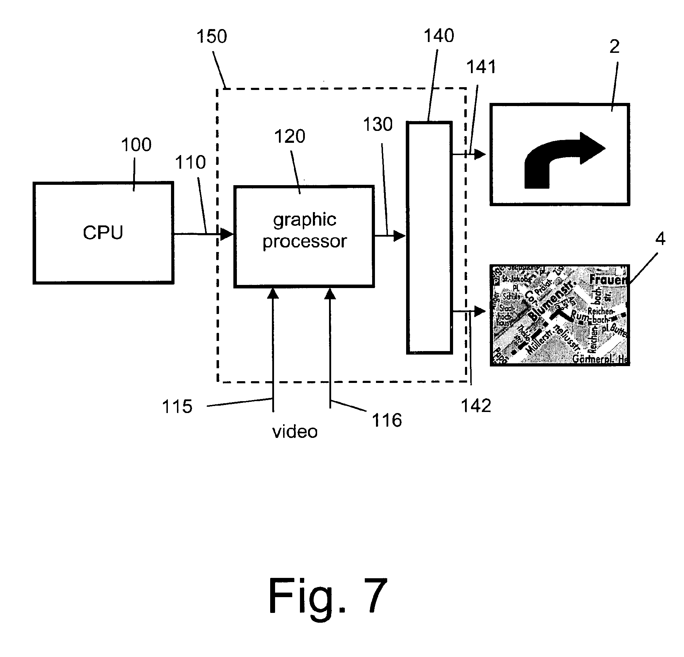

Referring now to Fig. 7, an alternative embodiment of the image display system is shown. While the image display system of Fig. 6 comprises a graphic processor 120 and a separate image display generator 140, both processing stages are combined according to the embodiment of Fig. 7. Thus, a single processor 150 includes the functionalities of processor 120 and image generator 140 shown as separate devices in Fig. 6, preferably implemented on a single chip. Such a graphic processor comprises an input terminal for receiving the image content and control information 110 from CPU 100 and two output terminals for providing the separate image display signals 141, 142 for display on the individual display devices 2,4. Additionally, the graphic processor may comprise additional terminals for video signals 115, 116 provided externally.

Although the previous embodiments have been described with respect to the processing and display of two image display signals, the present invention is not limited to two image display signals. A plurality of display devices may receive individual image display information from a signal image display input signal 130.

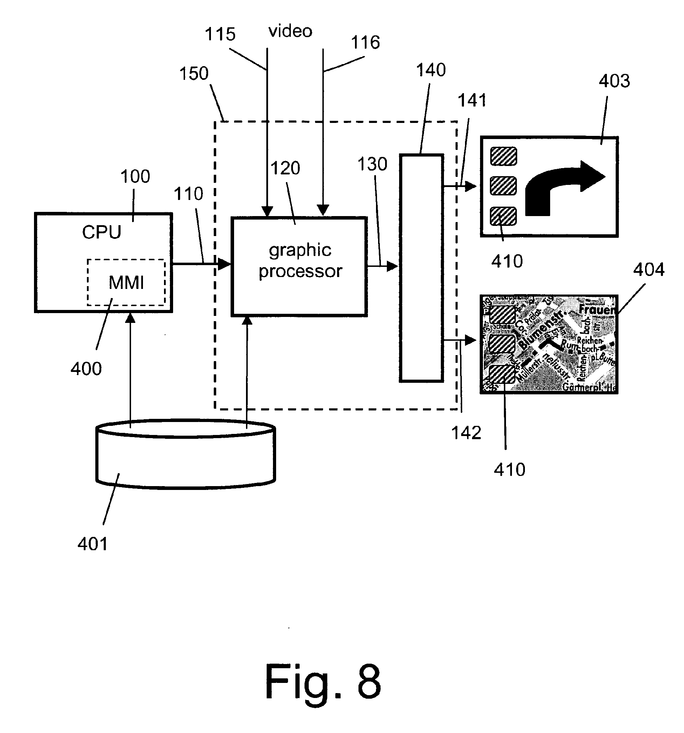

According to another preferred embodiment, the display devices additionally display information for facilitating the interaction with the viewer/user. As shown in Fig. 8, the displays 403, 404 display interaction information 410 in form of softkeys allowing a user to control the displayed information. The displayed information items 410 either relate to correspondingly arranged touch pads upon the display screen or to buttons arranged next to the displayed information items 410 adjacent to the display screen. For sake of simplicity, only three information items 410 are shown for each of the displays 403, 404. As it is obvious for a skilled person, neither the number is restricted to three nor is their arrangement or form limited to that shown in the drawings. In contrast, the number, form and arrangement may be freely selected by a system designer.

The interaction information to be displayed is generated by the graphic processor based on instructions from CPU 100, i.e. instructions which are included into the image generation information 110. Specifically, CPU 100 supplies a chain of image generation instructions to graphic processor 120 for generating the image display information for two separate displays together with interaction information 410 overlaid thereon. The generation of such instructions is preferably realized in form of a particular software module running on CPU 100. The function of such a software module is indicated by box 400 in Fig. 8.

According to a preferred embodiment, MMI information is generated individually for both display devices 403, 404 such that each of the displays has its own interaction information 410 overlaid on the image content. Although the individual interaction information 410 displayed on each of the displays 403, 404 may differ with respect to the indicated functionality and its graphic representation, the interaction information generation for both of the displays 403, 404 is based upon a common software database 401 accessed by CPU 100 and graphic processor 120.

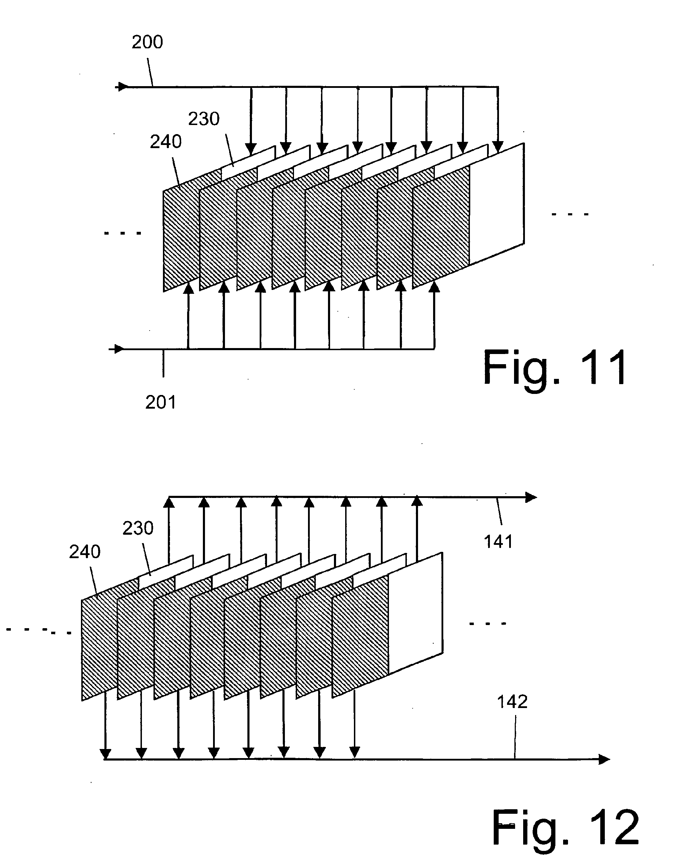

Referring now to Figures 9 to 15, illustrating the concept of the present invention in more detail. While Fig. 9 and Fig. 10 relate to the concept of distributing the image information separately on individual images, i.e. in temporal respect, Fig. 11 and Fig. 12 relate to the concept of distributing the image data within each individual image, i.e. in a spatial respect. Although not illustrated in the drawings, both processes, namely to divide the single image display input signal in temporal or spatial respect, may be combined.

Fig. 9 illustrates the concept of the single image display input signal of combining separate image display signals 200, 201 to form the single new image display signal. The first image data 200 are inserted into the images 220 (dark colored images) whereas the image data 201 is inserted into the bright colored images 210.

The different image data may be combined such that the images of the image sequence contain image data for separate display devices in alternate manner. The use of display devices of equal size can thus be implemented in a simple manner.

Alternatively, the amount of image information for each of the display devices may differ. The number of images assigned for each display is preferably adapted in proportion to the amount of image data of each image display signal 200, 201. For instance, display image 4 employed for the rear-seat or front-seat passengers may have a large amount of data to be transmitted and occupies most of the images 210. The image data for the drivers display 2 only occupies a small number of images 220 interspersed in predefined intervals within images 210.

The separation procedure executed by image display generator 140 is illustrated in connection with Fig. 10. Image data of the bright colored images 210 are used for generating image display signal 142, and the dark colored images 220 are used for generating display image signal 141. Therefore, the image display signals 141, 142 for the separate display devices 2,4 can be accurately constructed from the single image display input signal and supplied to the corresponding display devices 2,4.

Referring now to Fig. 11 and 12, alternative concept compared to that of Figures 9 and 10 is illustrated, namely distributing the separate image information in a spatial respect. The image data intended for display on both separate display devices is combined in each of the images of the image sequence of the single image display signal 130. Again, the image data 200 are assigned to the right hand image portion 230 and the other image data 201 are assigned to the left hand image portion 240. As shown in Fig. 12, the generation of the image display signal 141, 142 is achieved by separating the image data of each of the images. Although the illustrated embodiments only show - for sake of clarity - two image portions 230, 240 per image, any number of image portions may be used.

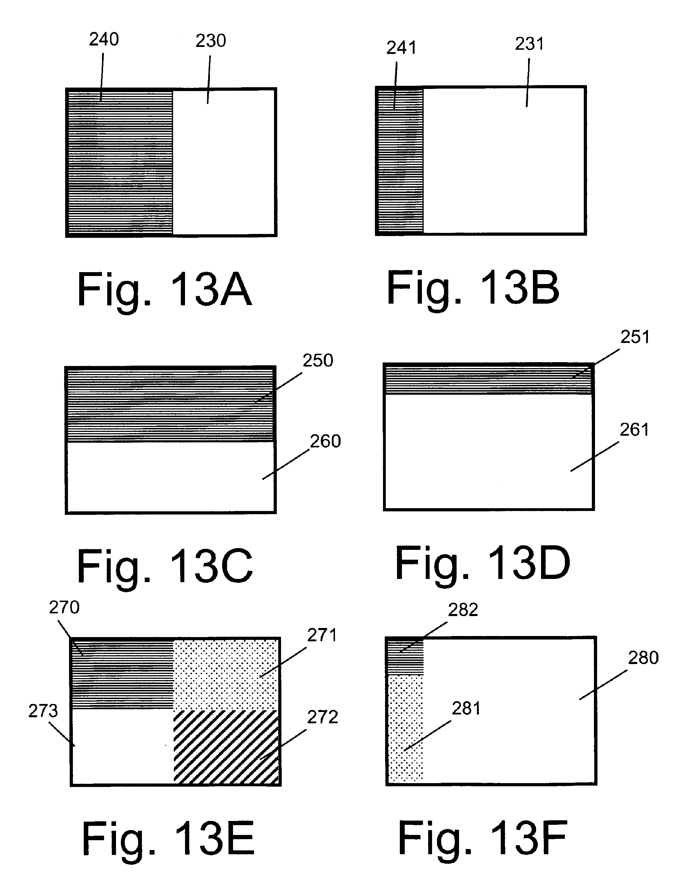

Fig. 11 and Fig. 12 show an image sequence having images divided in horizontal direction and comprising a first half 230 for first image data and a second half 240 for a second image data. Examples of other spatial divisions of the individual images are illustrated in Fig. 13A to Fig. 13F. Fig. 13A corresponds to the division shown in Fig. 11 and Fig. 12.

When using images requiring a different amount of data to be transmitted, the reduced amount may either result from a reduced frame rate or from a reduced resolution. A preferable concept for combining image data of different frame rates is shown in connection with Fig. 9 and Fig. 10. When having source image data of different resolutions, preferably the concept shown in Fig. 13B is employed. The image portion assigned to each of the image data (or display devices) is adapted to the amount of data to be transmitted per display device. Thus, the boarder line between both images is adjusted accordingly. Different amounts in data result in correspondingly adjusted sizes of the image portions 231, 241.

As shown in Fig. 13C and Fig. 13D, each image can also be divided in vertical direction into equally sized image portions 250, 260 or differently sized imaged portions 251, 261 with the same effect.

Image data for more than two image display devices may be provided by further dividing the images in vertical or horizontal respect. As shown in Fig. 13E and Fig. 13F, image data for more than two displays is generated by dividing the images in horizontal and vertical respect at the same time. While Fig. 13E illustrates four images portions 270, 271, 272, 273 of equal size, the image portions 280, 281, 282 of Fig. 13F all have a different size for correspondingly different display sizes.

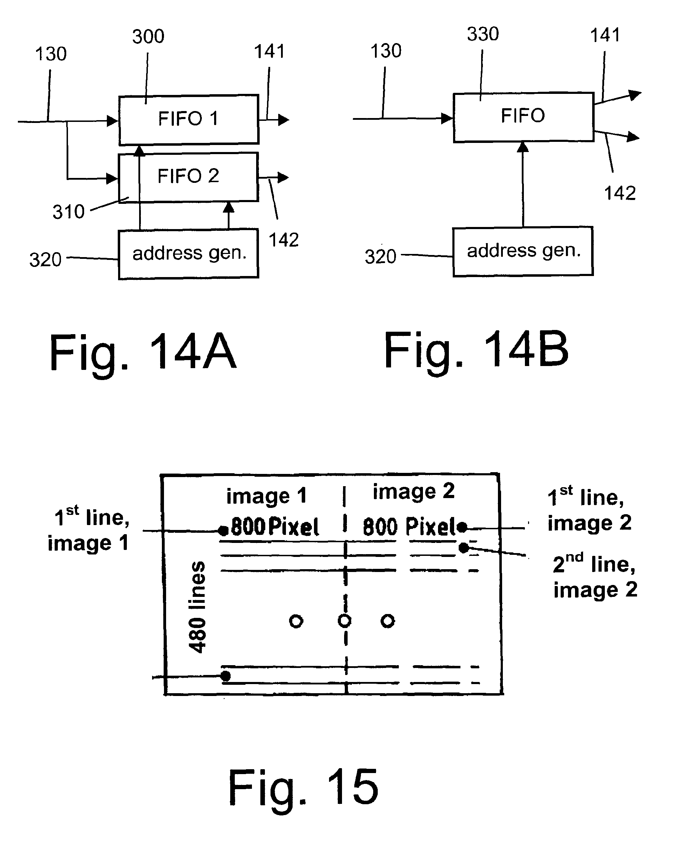

A more detailed example of distributing the image data for two display devices into images of a single image display signal will now be described in connection with Fig. 15. Each of the images (image 1, image 2) consists of 480 lines each having 800 pixels. As both images are of equal size, the pixels of each line may equally be assigned to both images by dividing the 1600 pixels of each line into 800 pixels for "image 1" and 800 pixels for "image 2".

A more detailed configuration of the image display signal generator 140 is shown in Fig. 14A and Fig. 14B. The single image display input signal 130 is provided to a memory buffering the single image display input signal. The single image display input signal 130 can be easily split into separate image display signals 141, 142 by either controlling the writing procedure of the single image display input signal 130 into the memory, or the reading procedure for reading the separate image display signals 141, 142 out of the memory.

Referring to Fig. 14A, the single image display input signal 130 is written into separate memories 300, 310 based on the underlying separate images. An address generating circuit 320 generates write addresses for writing the single image display input signal 130 into the memory 300, 310 based on the selected distribution scheme (cf. Figures 9 to 13).

When the single image display input signal 130 consists of images in accordance with the division shown in Fig. 15, the first 800 pixels of each line are written into the first memory 300, whereas the second 800 pixels are written into the second memory 310. Both memories may be read out in a consecutive manner providing image display signals 141, 142 for display on the separate image display devices 2,4. As the image division is accomplished on a line basis, FIFO memories 300, 310 can be line memories only requiring a small amount of pixels to be memorized at the same time.

In case the single image display input signal 130 comprises an image sequence in accordance with the concept illustrated in Fig. 9 and Fig. 10, the memories 300, 310 are frame memories adapted to store at least image data for one frame to be reproduced.

Alternatively, the split of the single image display input signal 130 may be accomplished by an address generator 320 controlling the reading procedure for providing the individual image display signals 141, 142. Again, memory 330 may be a line memory wherein the image data are distributed in a spatial respect as shown in Fig. 15. First, the 800 pixels of "image 1" are read out as image display signal 141, subsequently the read out pixels are supplied as the second image display signal 142.

Both display devices 2,4 displaying the image display signal 141, 142 are not a constitutional part of the image display device. The image display devices 2, 4 may be placed at locations different from that of the image generator 44 and connected thereto either by cable or by wireless transmission. For use with a vehicle multimedia system, such a wireless transmission facilitates the placement of display devices within the vehicle compartment.

Summarizing, the present invention relates to an image display system, in particular for use in a vehicle information and entertainment system, for displaying at least two different images on separate display devices. A single image display input signal contains a sequence of images wherein an image display signal generator splits the single image display input signal into at least two image display signals in temporal or spatial respect. The use of a single image display input signal enables a reduction of the required hardware effort for generating more than one image display signal.

## Claims

1. An image display system for displaying different images on separate display devices (2,4) based on a single image display input signal (130), said single image display input signal (130) containing a sequence of images, said image display system comprising:
at least two display devices (2,4), and
an image display signal generator (140) for generating at least two image display signals (141,142) from said single image display input signal (130) by dividing said single image display input signal (130) in temporal or spatial respect.

2. An image display system according to claim 1, wherein said image display signal generator (140) separates individual images (210,220) from the image sequence for generating each of said image display signals (141,142).

3. An image display system according to claim 2, wherein said image display signal generator (140) separates the images (210,220) for each of said image display signals (141,142) in accordance with a predefined image interval.

4. An image display system according to any of claims 1 to 3, wherein said image display signal generator (140) separates a predefined image portion (230,240) from each of the images for generating each of said image display signals (141,142).

5. An image display system according to claim 4, wherein each image portion (230,240) is defined by dividing each image in horizontal respect.

6. An image display system according to any of claims 1 to 4, wherein each of the images consists of a fixed number of lines and said image display signal generator (140) separates individual, predefined lines of each image for generating each of said image display signals (141,142).

7. An image display system according to any of claims 1 to 6, wherein the size of each image portion (230,240) assigned to each image display signal (11,12) corresponds to the individual data rate of the respective image display signal (141,142).

8. An image display system according to any of claims 1 to 7, wherein the display devices (2,4) are located at separate locations.

9. A vehicle information and entertainment system comprising an image display system according to any of claims 1 to 8.

10. A vehicle information and entertainment system according to claim 9, further comprising a car navigation system wherein one of said image display signals (141,142) containing first map data from said car navigation system.

11. A vehicle information and entertainment system according to claim 10, wherein another one of said image display signals (141,142) containing second map data different from said first map data.

12. A vehicle information and entertainment system according to claim 9 or 11, wherein said first or said second map data containing a directional command from said car navigation system.

13. A vehicle information and entertainment system according to any of claims 9 to 12, wherein at least one of said image display signals (141,142) representing video data.

14. A vehicle information and entertainment system according to any of claims 8 to 13, wherein said image display signals (141,142) representing data from a car navigation system, a television receiver, a DVD player, a cell phone, a cordless phone, an internet access device, a vehicle control device, or a rear view device.

15. A vehicle information and entertainment system according to any of claims 9 to 14, wherein one of said display devices (2; 8a) being mounted in the driver's field of view.

16. A vehicle information and entertainment system according to claim 15, wherein another one of said display devices (8b) being mounted in the field of view of a rear-seat passenger.

17. A vehicle information and entertainment system according to any of claims 9 to 14, wherein said display devices (6a,6b) being mounted in the field of view of view of separate rear-seat passengers.

18. An image display signal generator for generating at least two image display signals (141,142) from a signal image display input signal (130), said single image display input signal (130) containing a sequence of images and said image display generator generating said at least two image display signals (141,142) by dividing said single image display input signal (130) in temporal or spatial respect.

19. An image display signal generator according to claim 18, wherein said image display signal generator separates individual images (210,220) from the image sequence for generating each of said image display signals (141,142).

20. An image display signal generator according to claim 18 or 19, wherein said image display signal generator separates a predefined image portion (230,240) from each of the images of said image sequence for generating each of said image display signals (141,142).

21. An image display signal generator according to claim 20, wherein each image portion (230,240) is defined by dividing each image of said image sequence in horizontal respect.

22. An image display signal generator according to any of claims 18 to 21, further comprising a memory (300,310;330) and an address generating circuit (320) wherein
said memory (300,310;330) buffering said received single image display input signal (130), and
said address generating circuit (320) generating memory addresses for reading or writing pixel data into/from said memory (300,310;330).

23. An image display signal generator according to claim 22, wherein said memory (300,310;330) being a FIFO.

24. An image display signal generator according to claim 22 or 23, wherein said memory (300,310;330) being a line memory.

25. An image display signal generator according to claim 22 or 23, wherein said memory (300,310;330) being a frame memory.

26. A graphic processor for generating a single image display input signal (130) comprising an image display signal generator (140) in accordance with any of claims 18 to 25.

27. A graphic processor according to claim 26, further comprising a CPU input terminal for receiving image generating instructions (110) for generating said single image display input signal (130).

28. A graphic processor according to claim 26 or 27, further comprising at least one video signal input terminal for receiving a video signal (115,116) to be incorporated into said single image display input signal (130).

29. A graphic processor according to claim 27 or 28, wherein said image generating instructions (110) contain instructions for generating image information and additional instructions for generating image interaction information (410) to be overlaid on said image information.

30. A graphic processor according to claim 29, said graphic processor being adapted to access a single database (401) commonly used for generating image interaction information (410) to be overlaid on each of said image information of said image display signals (141,142).

31. A method for generating at least two image display signals (141,142) from a single image display input signal (130) for display on separate display devices (2,4), said single image display input signal (130) containing a sequence of images and said method dividing the sequence of images of said single image display input signal (130) in temporal or spatial respect to generate said image display signals (141,142).

32. A method according to claim 31, wherein said method separates individual images (210,220) from the image sequence for generating each of said image display signals (141,142).

33. A method according to claim 31 or 32, wherein said method separates a predefined image portion (230,240) from each of the images of said image sequence for generating each of said image display signals (141,142).

34. A method according to claim 33, wherein each image portion (230,240) is defined by dividing each image of said image sequence in vertical respect.
